# EUROPEAN PATENT APPLICATION

(11) **EP 2 311 677 A1**
(43) Date of publication of application: **20.04.2011**
(21) Application number: 09762035.5
(22) Date of filing: 04.06.2009
(51) Int. Cl.: B60J 3/02, B60J 3/06

(54) **SPOT SUN VISOR**

(30) Priority: 10.06.2008 JP 2008177362
(71) Applicant: Suzuki, Toshimi, Chiba 276-0028 (JP)
(72) Inventor: Suzuki, Toshimi, Chiba 276-0028 (JP)
(74) Representative: Marlow, Nicholas Simon
(86) International application number: PCT/IB2009/005845
(87) International publication number: WO 2009/150505

(57) **Abstract**

A spot sun visor for use in transportation vehicles having a substance of a little larger area than the disk of the sun. By moving the substance in a direction of the penetrating sunlight and place the substance in front position of the sun, the sunlight from the front view can be blocked or effectively reduced without interference of the field of the front view.

The substance has at least one arm to support and move the substance and an axle of the arm is equipped with a slide device stored in a unit case, which stores the substance during non-use. The arm pulls the substance down along the front glass and is controlled by a brake device installed at the end of the arm.

The spot sun visor has an electric motor drive system which can be activated by an electrical signal from a driver's seat, which automatically control positioning of the spot sun visor by installing an azimuth sensor to detect a direction of the sunlight and convert its information to an electrical signal.

## Description

### FIELD OF THE INVENTION

The present invention relates to a spot sun visor to be equipped in a cockpit of transportation vehicles, such as for example automobiles, for blocking or reducing of direct sunlight penetrating into the cockpit. By utilizing the substance having an area that is slightly larger than the disk of the sun, and moving the substance to a direction of the penetrating sunlight and placing it in just front position of the sun, the effect of sunlight can be blocked and reduced, without interferences in the field of view from the cockpit.

### BACKGROUND

Conventional automobiles are equipped with a rectangular sun visor to block or reduce direct sunlight penetrating through the front glass. It is usually positioned at the head lining of driver's seat during the driving, and pulls it down when shading is necessary.

However, this type of sun visor has a rather large area rectangular shading plate to block the sunlight penetrating from indefinite directions. Therefore, in case of using this sun visor, depending on the angle to pull it down for use, the upper half of the field of view required for driving may be disturbed. Especially when driving along city streets, it has weakness of that it is difficult to see traffic signals and road signs etc., which are required for a safety driving.

However, a beam of sunlight penetrating into the cockpit is only a small spot of the vast sky. The spot sun visor of the present invention is to be cut only the spot, thus protects the driver's eyes from intensive sunlight and is intended to achieve a safe driving without disturbing in front field of view.

Also, in addition to use in automobiles and trains, the present invention can be applied to cockpits for ships navigating the vast sea and airplanes flying across the sky.

As the ships and airplanes mentioned above are usually moving for a long time on predefined route, as often as not they make progress toward the sun or they may encounter a sudden weather change or an obstacle coming from unexpected direction. For such predicaments, they always need a constant surveillance and a wide view, and the spot sun visor of the present invention is intended effective use with these transportations in order to contribute traffic safety.

### DISCLOSURE OF THE INVENTION

The present invention provides a spot sun visor consisting of a substance to block or reduce the effect of direct sunlight and at least one arm to support the substance, and to get a parallel movement, an axle to that arm is vertically set to the cross section of the front glass. The spot sun visor mounted there is horizontally set to an axis of the axle, therefore the substance can be moved parallel to the front glass.

Also, on the spot sun visor of the present invention, the axle of the arm is equipped inside the unit case and its axial basic point can be moved by a slide device built in the base plate, and movements of the arm and axle can be stably controlled by utilizing frictions of a brake device mounted at the axle.

By this structure, a slide device for pulling down the arms along the front glass and putting the arm back into an original position and the swing device of the arm that provides movements from side to side are linked by the axle each other in manipulations. Accordingly, a series of operations of quick moving by touch and stopping by release of the spot sun visor can be accomplished via a one-touch-and-release control from the driver's seat, thus a spot sun visor capable of adjusting to direct sunlight penetrating from different directions can be obtained.

Also, in this invention, a surface of the arm is bent at a slight angle to the horizontal plane of an axis of the axle so that the arm can be moved in parallel to the front glass having a curved surface, then its angle is adjusted to move parallel to the curve of the front glass.

Furthermore, in this invention, by providing an electric motor drive system such as an electric drive device attached to the above-mentioned spot sun visor and controls it by electrical signals from the driver's seat, an electric-motor-drive spot sun visor can be achieved;

Also, by installing a sunbeam sensor in the cockpit and connecting it to the electrical circuits, an automatic electric motor drive control system which senses a direction of the penetrating sunlight and moves the spot san visor is provided.

As mentioned above, the spot sun visor of the present invention generally consists of at least one arm and a substance mounted on the arm, and can be moved by the slide device installed in the unit case, and the movement of an axle of the arm is stably controlled by a brake device mounted on the axle of the arm.

### BREIF DESCRIPTION OF THE DRAWINGS

FIG. 1 is a plan view of an embodiment according to the present invention and showing fundamental operations;
FIG. 2 is a partially cross-sectional side view of the embodiment according to Fig. 1;.
FIG.3 is an enlarged partial sectional view of the unit case of the embodiment according to Fig.1;
FIG.4 is a plan view showing another embodiment according to the present invention;
FIG.5 is a plan view showing an embodiment of an electric motor drive system of a spot sun visor according to the present invention.

### THE BEST FORMATION FOR IMPLEMENTATION OF THE INVENTION

An embodiment of the present invention is explained as follows based upon the drawings.

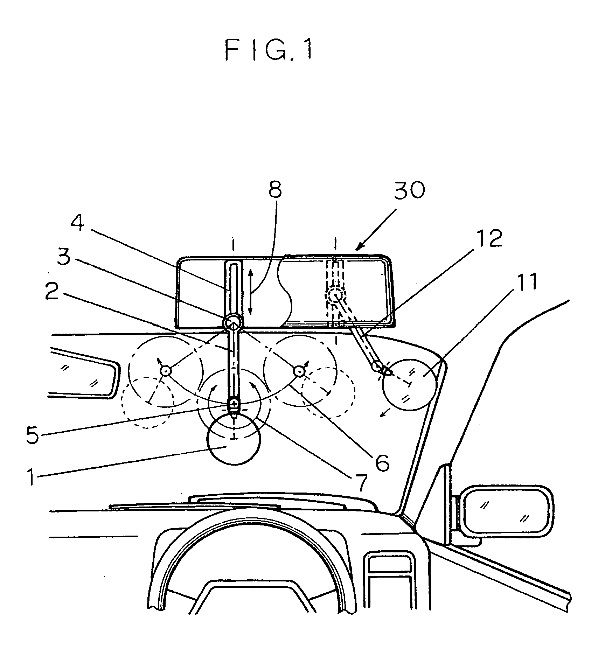

FIG.1 shows an embodiment of the spot sun visor of the present invention installed in an ordinary car and a plan view showing a series of operation of moving the substance 1 to block or reduce the direct sunlight penetrating from the direction of the sun by placing the substance in just front of the sun.

As shown in the figure, the spot sun visor is structured so that the substance 1 to block and reduce the direct sunlight is equipped with a turn table 5 attached at the end of the arm 2 and an axle 3 of the arm 2 is assembled in a unit case 30 installed in the cockpit. The axle 3 can be moved by a slide device 4 built in the base plate of the case.

Accordingly, the spot sun visor of the present invention is movable in a direction of arrow 8 with the axle 3 working as a pivot of the arm. A slide action pulling the substance 1 down along the front glass and putting the substance back in the original position and a swing action (arrow 6) moving the arm 2 right and left are controllable by a brake device of the axle 3 and fixable at arbitrary positions.

Also, an the end of the substance 1 is mounted on a tilt mechanism having a turn table 5 and an axle and is movable within a direction of arrow 7 by rotating in the axle, and can be fixed at a position in just front of the sun by using a braking action of the axle.

Furthermore, by installing an additional one more arm 12 in this embodiment and adding a mirror 11 on one side of a substance positioned at the end of the arm 12, it is possible to view approaching following car that appear in a blind angle of the door mirror or when a change of driving lane is necessary. Besides, at the same time, it is possible to use the substance and mirror 11 to block off the sunlight around the front pillar.

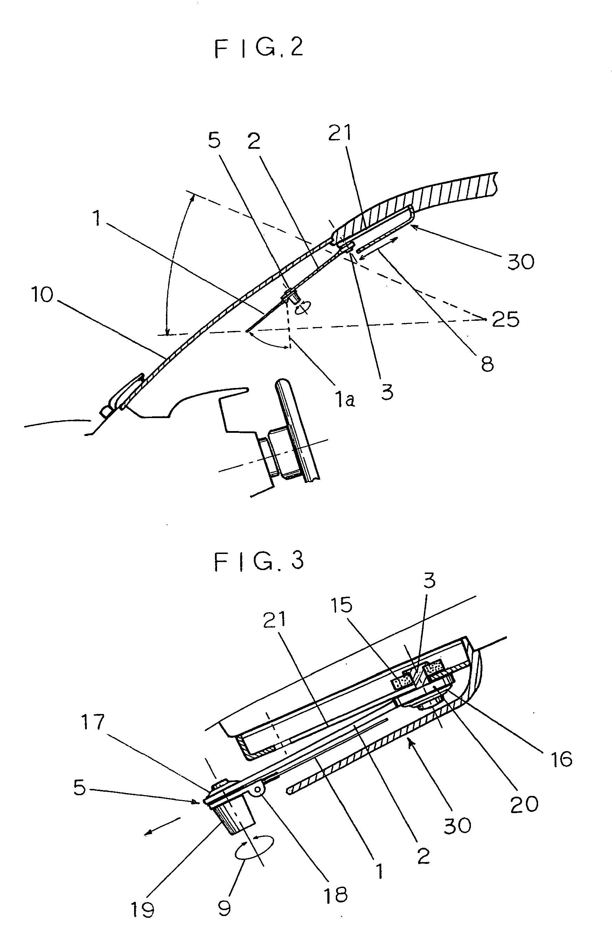

FIG2 shows a side view of the embodiment mentioned above (partially in cross section);

As shown in the figure, the spot sun visor of the present invention is movable in the direction of arrow 8 by the slide device 4 installed in the unit case 30, where the cross section of the arm installed in the unit case 30 and the cross section of the substance 1 are almost in parallel with the cross section of the front glass 10 and are movable by facing each other.

Also, the substance 1 can be tilted forward (dotted line 1a) by a tilt mechanism of the turntable 5 attached at the end of the arm 2 to change an angle, Thus, spot cutting of the sunlight on the skyline (rising and setting sun), which was impossible for a conventional sun visor, becomes possible and consequently protects driver's eyes from the penetrating direct sunlight from the front view at the visual point 25 of the driver's seat.

FIG.3 is an embodiment that the spot sun visor of the present invention is stored during non-use within the unit case 30, where as shown in the figure, the substance 1 to block or reduce the direct sunlight is rotated at 180 degrees and stored in the case.

Also, the arm 2 is provided with a pedestal 20 at a part attached with axle 3, where an adequate mechanical strength and stable smooth slide plane are also provided for the contact plane exposed to the base plate 21 of the case, and the arm is bent slightly at an angle to the horizontal surface which is at right angle to the axis of the axle 3 and is further assembled on the base plate 21 with the brake device mounted at the axle (partially in cross section).

The brake unit is integrated in an assembly of the permanent magnet 15 to pinch the base plate 21 at inner side thereof, and the arm 2 and a spring 16 of elastic material at outer side thereof. The brake device functions via the friction arising on the base plate 21 from the attraction of the magnet 15 and the compressive force of the spring in order to provide stable control of the movement and positioning of the arm 2.

Also, the substance 1 is mounted to the tilt mechanism 18 on the turn table 5 mounted at the end of the arm, and can be rotated in 360 degrees by use of the rotation knob 19, as shown by an arrow 9, and the angle of the rotation can be adjustably positioned by use of a spring 17 inserted into the axle of the knob 19. Further, the tilt angle can be adjustably positioned by utilizing a friction provided in the tilt mechanism 18.

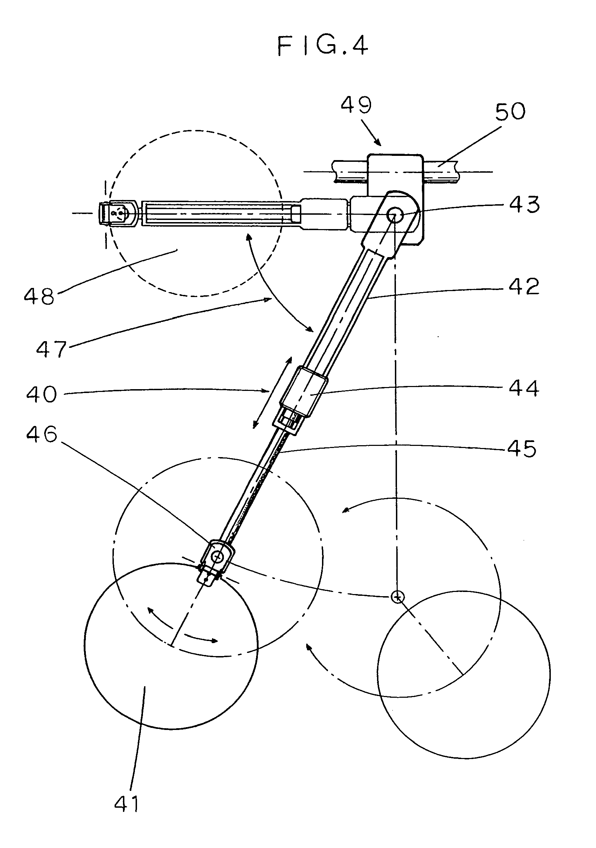

Fig. 4 is an embodiment of the spot sun visor applied on trains, ships and airplanes having wider space of the front glass, and the length of the arm 42 of the sun visor is adjustable by pulling the built-in rod 45 out or pushing the rod 45 into the arm 42 in a direction of arrow 40. Further, by swinging the arm 42 left and right at the axle 43 as a pivot of the arm 42, and by moving the arm 42 in the direction of penetrating sunlight, the spot sun visor can cover a wider area of a front glass.

The substance 41 for blocking or reducing the direct sunlight is mounted on a turn table 46 at the end of the rod 45 and rotates left and right at an axis of the axle of the turn table and can be fixed in position in just front of the sun by a brake device mounted in the axle of the turn table 46. Furthermore, when the sun visor is not in use, the rod 45 is inserted into the arm 42 to shorten its length and moved to the direction indicated by arrow 47. The collapsed arm 42 and rod 45 are rotated in the direction indicated by arrow 47, and then the substance 41 is rotated up to the position indicated by the dotted line 48, and retained there on structure.

Also, the arm 42 is mounted on a sustainer 49 which is equipped in the cockpit and freely movable along a rail 50, therefore it can cover a broad area of the front glass.

The following is the explanation of the favorable material for use in the above-mentioned-embodiment.

The substance 1 for blocking or reducing the direct sunlight is made mainly from an opaque material using a light metal such as aluminum or titanium alloys, or made from a semi-opaque material using synthetic resins applying a fine prism processing, surface coating or coloring etc. to acryl or polyester resins. In cases, they are material having effectiveness to block or reduce the sunlight and can be processed in the form of a plate.

This present invention comprises that by combining polarization glass, filters, sun glass or other materials with a synthetic resin, the direct sun light penetrating into the cockpit can be converted to a favorable color tone by polarization or modulation:

This invention is intended to reduce the sunlight to an intensity of the sunlight existing in a cloud or fog, in other words, by providing a substance, is intended to build natural looking conditions through the front glass at the cockpit.

Also, the substance 1 mentioned above is preferable to be used in a circle, oval, polygon or similar shapes. The substance 1 has a feature that, by mounting its end on the tilt mechanism of the turn table, the substance can be turned or tilted at the mounting point.

Also, as to the arm 2 for supporting the above-mentioned substance (as shown in Fig. 1 to 3), it is preferable to use processed stainless steel, beryllium bronze plate or the like, which has prominent anti-corrosion and abrasion resistance and moderate elasticity. Further, by forming a pedestal at the part where the arm is fixed to the axle, the operation of the arm can be controlled smoothly as frictions or contacts between the parts are reduced, by which the stable movement of the axle is ensured.

Also, the arm 42 shown in Fig.4 has an integrated structure consisting of a stainless pipe of an adequate length, the rod 45 of nearly equal length inserted into the pipe and the control lever 44 attached at the end of the rod 45, therefore the length of the arm is structurally adjustable.

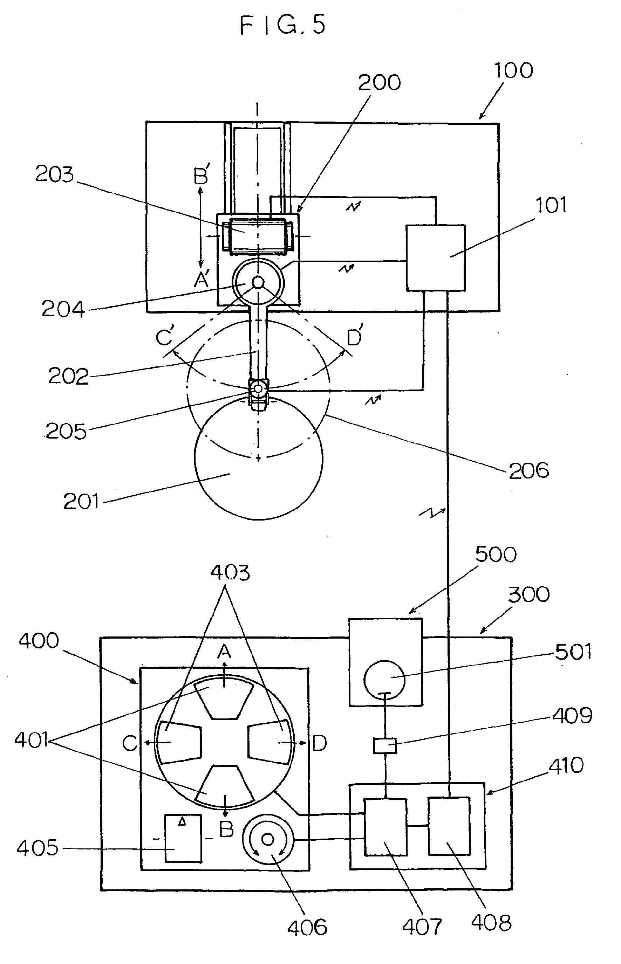

Fig 5 shows an embodiment of the electric motor drive system, in which the electric drive device is mounted on the spot sun visor of the present invention and controls the position of the spot sun visor by an electrical signal activated from the driver's seat.

As shown in Fig. 5, the electric drive device 200 installed in the unit case 100 has an electric drive motor 203 to pull the spot sun visor of the present invention down along the front glass and to push the spot sun visor back to the original position. Also the electric drive device 200 comprises a stepping motor 204 to move the arm 202 from right to left, and these are connected by an electrical circuit to the signal control device 101.

As shown in Fig. 5, the electric drive device 200 installed in the unit case 100 has an electric drive motor 203 to pull the spot sun visor of the present invention down along the front glass and to push the spot sun visor back to the original position. Also the electric drive device 200 comprises a stepping motor 204 to move the arm 202 from right to left, and these are connected by an electrical circuit to the signal control device 101.

Also, the substance 201 for blocking or reducing the direct sunlight is mounted with another stepping motor 205 at the end of the arm 202, which rotates from right to left (a dot-dash line 206) by an electrical signal and can be stopped at an arbitrary position.

Also, an operation panel 300 installed at the driver's seat comprises a cross key pad 400 to control the above-mentioned electric drive device 200 and an electronic device 410 to convert physical inputs to an electrical signal. These are connected via an electrical circuit.

As further shown in Fig. 5, on the cross key pad 400, the keys 401 arranged in the A-B direction cause the above-mentioned driving motor 203 to move along the A'-B' directions indicated by an arrow and the keys 403 arranged in the C-D direction cause the above-mentioned arm 202 to move in the C'-D' directions indicated by an arrow.

The substance 201 for blocking or reducing the direct sunlight is controlled by a signal from a turn key 406 on the operation panel, where the stepping motor 205 mounted on the end of the arm rotates up to the same direction and the same angle of the turn key 406 and stops at the same position when the turn key stops.

Moreover, in the electronic device 410 on the above-mentioned operation panel, a mixer 407 to separate plural number of key input information and a pulse converter 408 to convert signals from the mixer to pulse signals are built-in, and they compose the electric motor drive system for sending the pulse signals_through electric circuits to the signal control device 101 in the unit case.

Furthermore, in the electric motor drive system, by installing an azimuth sensor 501 to detect the sunlight through the front glass 500 and an electronic device 409 to convert the information to electrical signals and then connecting them to the mixer 407, the automatic electric motor drive system to automatically control the spot sun visor of the present invention can be built.

### AVAILABILTY IN INDUSTRIES

As mentioned above, by installing the spot sun visor of the present invention into the cockpit of transportation vehicles such as automobiles, trains, ships, air planes, etc., only the direct sunlight can be blocked or reduced, without interference of the front field of view. Especially, by providing the function of moving freely along the front glass and fixing it in just front position of the sun, the spot san visor can be adjusted to accommodate the sunlight coming from different directions, and driver's eyes can be protected from intensive sunlight as a result. Accordingly, the spot sun visor of the present invention will contribute immensely to traffic safety, and has industrial applicability.

## Claims

1. a spot sun visor to be installed in a cockpit of transportation vehicles, in which the substance for blocking or reducing a direct sunlight can be moved to a direction of the sunlight and can be positioned in just front of the sun:
said substance is connected to at least one arm to support and move the substance, the arm is installed in parallel to a cross section of the front glass and the arm's axis is mounted on the base plate of the unit case installed in the cockpit:
said substance can be pulled down from the unit case to a front position, and can be sliding from side to side, swinging at said axis and stored again into the unit case, and each function mentioned above can be controlled by a brake device assembled with the axis;

2. said substance mentioned in claim 1 has an area that is slightly larger than the disk of the sun penetrated into the cockpit, which is made from an opaque or semi-opaque material consisting of compound of a fine prism or polarization glass etc. with optically processed synthetic resin;
the edge of said substance is mounted in a tilt mechanism having an axis on a turn table, and by using a braking function caused from the axis, the substance can be rotated and tilted by the tilt mechanism, then can be positioned in just front of the sun;

3. said sun visor mentioned in claim 1 and 2 consists of which said substance is stored in the unit case by rotating 180 degree when it is in the non-use position, and said substance can select a direction of sunlight by swinging when it is in the use position, besides said substance has a mirror on its one side;

4. furthermore, the spot sun visor according to claim 1, 2 and 3, comprises a feature, that the arm supporting the substance is mounted on a slid-able rail and contains adjustable mechanism to expand and shorten its length and detects widespread sunlight:

5. the spot sun visor having an electric drive system, where the spot sun visor is installed in the cockpit of transportation vehicles in which the substance for blocking or reducing the sunlight and a drive mechanism are integrated into at least one arm; the electric motor drive system consists of the 1 st electric motor (203) to slide said drive mechanism in a direction (A'-B'); the 1st stepping motor (204) to swing the arm left and right; the 2nd stepping motor (205) to turn the substance left and right; besides they are electrically connected to a signal control device (101) and can be activated from the driver's seat;

6. the spot sun visor having an electric drive system, where the drive system according to claim 5 consists of an electronic device (410) which converts information of the key panel (400) installed in the driver's room to electrical signals and an electronic motor drive device (410) which controls the electric motor drive device (200);

7. the spot sun visor having an automatic control system, where in the electric motor drive system according to claim 5 and 6, by installing an azimuth sensor (501) to detect the sunlight, connecting to the electronic device and converting information of the sensor to electrical signals, the spot sun visor can be controlled by said electric motor drive device (200) ;

8. the spot sun visor installed in a cockpit of traffic vehicles, which has a slightly larger substance than the disk of the sun; by moving the substance and positioning it in just front of the sun, only the sunlight can be effectively blocked or reduced, without undue interferences of front fields of view.

## Amended claims

### Amended claims under Art. 19.1 PCT

**1.** (amended) a spot sun visor to be installed in a cockpit of transportation vehicles, the spot sun visor comprising; a substance for blocking or reducing a direct sunlight is mounted with at least one supporting arm whose end is set at a pivot of the unit case; the arm is slightly bent to be kept in parallel to a cross section of the front glass; the arm's axis can move and pull down said substance by sliding of the axis to a front position, and also can be re-stored into the unit case by moving in reverse;

**2.** (amended) the spot sun visor according to the claim 1, wherein said substance is set with a tilt mechanism having a turn table and is controlled in a rotation and tilt angles by utilizing frictions caused from a spring of the turn table ;

**3.** (amended) the spot sun visor according to the claim 1 and claim 2, said substance is stored in the unit case by rotating 180 degree when it is in non-use, and said substance can be rotated to a direction of the sunlight and positioned in just front of the sun when it is in use ;

**4.** (deleted)

**5.** (amended) the spot sun visor according to the claim 1, wherein the substance for blocking and reducing a direct sunlight is integrated together with a supporting arm and a drive device of the unit case, and is provided with a motor drive mechanism of controlling positions from non-use to use by sending electrical signals ; and
the spot sun visor consisting of an electric drive device, wherein the electric drive device comprises the first electric motor (203) to slide said drive device in a direction (A'- B'); the first stepping motor (204) to swing the arm to left and right; the second stepping motor (205) to rotate said substance to left and right; besides they are electrically connected to a signal control device (101) and can be activated from the driver's seat;

**6.** (amended) the electric drive system according to the claim 5 further comprising; a key panel (400) installed in the cockpit and an electronic device (410) converts information from the key panel to electrical signals, and they are connecting to the drive device of the unit case;

**7.** (amended) the electric drive system according to the claim 6, further comprising; an automatic electric motor drive system, wherein an azimuth sensor (501) to detect the sunlight is connected to the electronic device converting information of the sensor to electrical signals.

**8.** (amended) the electric drive system according to the claim 5 and claim 6 further comprises; a cross keys (401, 403) which is installed in the cockpit controls the drive system and a turn key (406) rotates the substance; thus a series of these operations can be achieved manually from the driver's seat.
I have prepared to submit my above-mentioned PCT application to the European Patent Once with guidance of the Japan Patent Office. There are inquiries related to this documentation as follows:
1. If there is a mistake in the attached document, please inform of it to me.
2. If there is lack in the sentence, please indicate of it and send me a guidance manual to provide a correct document.
3. Please inform me of a necessary amount of money for Europe-wide patent application.
If there is an application format, please send it to me. Since the remittance will be sent by a postal money order, please indicate that amount in Euro or US dollars.
The applicant, Who received the international Search Report relating to the above identified International Application transmitted on September 8.2009, hereby files amendment under Article 19 (1) as in the attached sheets.
We hereby would like to amend the claims 1, 2, 3, 5, 6, 7, 8 and also cancel the claims 4.
The applicant also files as attached herewith a brief statement explaining the amendment and indicating any impact the amendment might have on the description or the drawings.
